# EUROPÄISCHE PATENTSCHRIFT

(11) **EP 3 236 197 B1**
(45) Veröffentlichungstag und Bekanntmachung des Hinweises auf die Patenterteilung: **15.04.2020**
(21) Anmeldenummer: 17166973.2
(22) Anmeldetag: 19.04.2017
(51) Int. Cl.: G01B 7/16, G01B 1/00, G01L 1/22

(54) **DEHNUNGSSENSOR UND VERFAHREN ZUM HERSTELLEN EINES DEHNUNGSSENSORS**
ELONGATION SENSOR AND METHOD FOR PRODUCING SAME
CAPTEUR D'EXPANSION ET SON PROCÉDÉ DE FABRICATION

(30) Priorität: 22.04.2016 DE 102016107464
(43) Veröffentlichungstag der Anmeldung: 25.10.2017
(73) Patentinhaber: FiberCheck GmbH, 09126 Chemnitz (DE)
(72) Erfinder: Mäder, Thomas, 09116 Chemnitz (DE); Senf, Björn, 01259 Dresden (DE); Navarro de Sosa, Inaki, 01109 Dresden (DE); Wolf, Peter, 09126 Chemnitz (DE); Meyhöfer, Tobias, 04277 Leipzig (DE)
(74) Vertreter: Steiniger, Carmen

(56) Entgegenhaltungen:
- JP-B2- 3 971 961
- JP-B2- 4 877 950
- US-A1- 2003 056 599
- G. N. Dayananda: "NiTi Super Elastic Shape Memory Alloys for Energy Dissipation in Smart Systems for Aerospace Applications", , 26. August 2011 (2011-08-26), XP055471080, Gefunden im Internet: URL:https://nal-ir.nal.res.in/9889/1/GND-T hesis-Complete.pdf [gefunden am 2018-04-26]

## Beschreibung

Die vorliegende Erfindung betrifft einen Dehnungssensor mit wenigstens einem aus einer Formgedächtnislegierung ausgebildeten pseudoelastischen draht- oder bandförmigen elektrischen Leiter, welcher in einer zwei- und/oder dreidimensionalen Anordnung in ein Substrat eingebracht oder auf einem Substrat befestigt ist. Außerdem betrifft die Erfindung ein Verfahren zum Herstellen eines Dehnungssensors.

Ein gattungsgemäßer Dehnungssensor ist beispielsweise aus der Druckschrift US 2003/0056599 A1 bekannt. Der bekannte Dehnungssensor ist so aus einem Draht aus Nitinol, einer Formgedächtnislegierung, gebogen, dass er ein zweidimensionales Mäander ausbildet. Dabei sind jeweils lange Abschnitte des Drahtes parallel zueinander und kurze Abschnitte des Drahtes senkrecht zu den langen Abschnitten angeordnet. Damit lässt sich insbesondere eine Dehnung entlang der Ausrichtung der langen Abschnitte sehr gut messen. Dieser Dehnungssensor kann zum Beispiel in Gewebe eingebracht werden, beispielsweise bei einem Sicherheitsgurt. Es ist also bekannt, Dehnungssensoren aus Formgedächtnislegierungen in Temperatur-geregelten Umgebungen zu verwenden. Der elektrische Widerstand des Dehnungssensors kann auf bekannte Art ermittelt werden, wodurch Rückschlüsse auf eine erfolgte Dehnung des Sensors bzw. des Materials, in das der Sensor eingebracht ist, möglich sind.

In der Druckschrift US 6,622,558 B2 ist ein Dehnungssensor beschrieben, welcher eine Formgedächtnislegierung aufweist. Als Formgedächtnislegierung kann beispielsweise eine Titan-Nickel-Gedächtnislegierung verwendet werden, bei welcher sich die Phasenübergangstemperatur in Abhängigkeit der Titan- und Nickel-Anteile verändert.

Die Druckschrift JP 4 877 950 B2 offenbart eine Verbundplatte, die als Dehnungssensor verwendet werden kann. Die Verbundplatte besteht aus einem Basismaterial, auf welches oder in welches aus einer Formgedächtnislegierung ausgebildete Drähte (SMA-Drähte) auf- oder eingebracht sind. Die SMA-Drähte können geradlinig, parallel zueinander verlaufend oder sich kreuzend verlaufend in dem Basismaterial angeordnet sein. Ferner können die SMA-Drähte aus verschiedenen Materialien ausgebildet werden, wobei die SMA-Drähte in einigen Ausgestaltungsvarianten eine Martensitstarttemperatur M_{S} von -12 °C aufweisen können.

Die Druckschrift JP 3 971 961 B2 beinhaltet einen Dehnungssensor, der aus einer aus Harzfolie ausgebildeten Basisplatte mit darauf in beliebiger Form aufgebrachtem Sensordraht besteht. Der Sensordraht ist aus einer Cu-Al-Mn-Legierung ausgebildet, wobei sich der Sensordraht dadurch auszeichnet, dass sich dessen elektrischer Widerstand proportional zur Dehnung ändert. Der Sensordraht weist zudem eine Zweiphasenstruktur aus einer Austenit- und einer Martensitphase auf. Hierbei liegt die Martensitstarttemperatur M_{S} bei -25 °C.

G. N. Dayananda beschreibt in seiner Offenlegung "NiTi Super Elastic Shape Memory for Energy Dissipation in Smart Systems for Aerospace Applications" die Verwendung einer NiTi-Formgedächtnislegierung als Dehnungssensor. Experimentelle Untersuchungen sollten zeigen, welches NiTi-Formgedächtnismaterial sich zur Verwendung als Dehnungssensor eignet. Hierbei wurde ein kaltgeformter Draht um eine Metallspule gewickelt, 15 Minuten einer Wärmebehandlung unterzogen und anschließend mittels Wasser abgeschreckt. Die Wärmebehandlungen wurden bei Temperaturen von 450, 500, 550 und 600 °C durchgeführt. Die Sensorfunktion der NiTi-Formgedächtnislegierung wird durch Anlegen eines elektrischen Signals an einem aus der NiTi-Formgedächtnislegierung ausgebildeten Objekt erzielt. Hierbei verändern sich mit der Länge des Objektes die elektrischen Messwerte.

Es ist die Aufgabe der vorliegenden Erfindung, die Einsatzmöglichkeiten eines Dehnungssensors aus einer Formgedächtnislegierung zu erweitern.

Die Aufgabe wird erfindungsgemäß durch einen Dehnungssensor nach Anspruch 1 und durch ein Verfahren zu dessen Herstellung nach Anspruch 5 gelöst.

Formgedächtnislegierungen sind spezielle Metalle, welche in zwei verschiedenen Kristallstrukturen vorliegen können, nämlich einer austenitischen Struktur und einer martensitischen Struktur. Als Materialien für Formgedächtnislegierungen sind beispielsweise NiTi, NiTiCu, CuZn, CuZnAl, CuAlNi, FeNiAl, FeMnSi, ZnAuCu bekannt. Die austenitische Struktur oder Phase ist stets bei hohen Temperaturen die thermodynamisch stabile, vorherrschende Phase und die martensitische Phase ist bei niedrigen Temperaturen die thermodynamisch stabile, vorherrschende Phase. Die austenitische Phase und die martensitische Phase weisen voneinander verschiedene Kristallstrukturen und dadurch beispielsweise auch voneinander verschiedene elektrische Widerstände auf. Die Materialien können je nach stöchiometrischer Zusammensetzung verschiedene Übergangstemperaturen zwischen der austenitischen Struktur und der martensitischen Struktur aufweisen.

Formgedächtnislegierungen können in bestimmten Temperaturbereichen pseudoelastisches Verhalten aufweisen. Dabei kann ein Bauteil aus einer Formgedächtnislegierung eine bis zu zwanzigmal höhere reversible, vermeintlich elastische Verformung aufweisen als ein Bauteil aus einem anderen, regulären Metall wie beispielsweise Federstahl. Ein Grundzustand ist dabei regelmäßig die austenitische Phase, welche sich bei der Verformung aufgrund von mechanischer Energie in die martensitische Phase umwandelt. Durch die Phasenumwandlung wird bei vergleichsweise geringer Spannung beispielsweise eine Dehnung von bis zu 8 % ermöglicht. Wenn die Spannung wegfällt, also keine mechanische Energie mehr auf das Bauteil wirkt, kann es in seinen Ursprungszustand zurückkehren, die martensitische Phase wandelt sich erneut in die austenitische Phase um, und durch diese Phasenumwandlung kehrt das Bauteil in seine ursprüngliche Form zurück. Aufgrund der involvierten Strukturumwandlung ist dieses Verhalten keine echte Elastizität, sondern wird Pseudoelastizität oder auch Superelastizität genannt.

Da die Dehnung einer pseudoelastischen Formgedächtnislegierung einerseits bei geringer mechanischer Spannung und reversibel möglich ist und sich andererseits dabei durch die Phasenumwandlung die elektrischen Eigenschaften, wie beispielsweise der elektrische Widerstand, der Formgedächtnislegierung signifikant ändern, eignen sich pseudoelastische Formgedächtnislegierung sehr gut für Sensoren, welche Verformungen wie Dehnungen und Biegungen messen.

Die zwei- bzw. dreidimensionale Anordnung des band- oder drahtförmigen elektrischen Leiters bedeutet, dass der elektrische Leiter mehrere Biegungen und Wendungen aufweist, sodass er nicht nur linear in oder an einem Substrat befestigt wird. Zweidimensional ist beispielsweise eine im Wesentlichen ebene Anordnung des Leiters, also etwa in Form eines Mäanders wie bei einer Fußbodenheizung oder in Form einer Spirale, ähnlich einem Schneckenhaus. Eine dreidimensionale Anordnung des Leiters kann beispielsweise eine Helix sein.

Bei Dehnmessstreifen, welche zum Beispiel aus Konstantan oder einer PtW-Legierung ausgebildet sind, oder auch bei optischen Faser-Bragg-Gitter-Sensoren ist in einem Einsatz zur Dehnungsmessung eine Temperaturkompensation erforderlich, wodurch ein hoher messtechnischer Aufwand betrieben werden muss. Bei einem Dehnungssensor aus einer Formgedächtnislegierung ist dies nicht der Fall, da in der austenitischen Phase ein Heißleiterverhalten beobachtet werden kann und dadurch der elektrische Widerstand zwar mit steigender Temperatur sinkt, dies jedoch durch die thermische Längenänderung kompensiert wird. In Summe ist in der austenitischen Phase, also in einem für die Anwendung des Dehnungssensors interessanten Temperaturbereich, keine wesentliche elektrische Widerstandsänderung vorhanden. Eine große Änderung des elektrischen Widerstandes wird jedoch bei der Phasenumwandlung zu der martensitischen Phase beobachtet, wodurch sich die Widerstandsänderung sehr gut als auszuwertendes Messsignal für eine Geometrieänderung des Dehnungssensors und somit des Substrates eignet.

Die Martensitstarttemperatur ist eine Phasenumwandlungstemperatur, bei welcher bei einem Abkühlen eine Umwandlung der austenitischen Phase in eine martensitische Phase beginnt. Die Phasenumwandlung ist ein gradueller Prozess und ist mit dem Erreichen einer Martensitendtemperatur, welche kleiner als die Martensitstarttemperatur ist, abgeschlossen.

Das pseudoelastische Verhalten der Formgedächtnislegierung ist oberhalb der Martensitstarttempereratur vorhanden. So ist der elektrische Widerstand der Formgedächtnislegierung oberhalb der Martensitstarttemperatur bis etwa 100 °C nahezu konstant, wohingegen beim Unterschreiten der Martensitstarttemperatur der elektrische Widerstand ansteigt. Demzufolge markiert die Martensitstarttemperatur eine untere Temperaturgrenze zur Benutzung der Formgedächtnislegierung für einen Dehnungssensor.

Da bei der vorliegenden Erfindung die Martensitstarttemperatur unter 10 °C liegt, ist ein sehr großer Temperaturbereich zugänglich, in dem der erfindungsgemäße Dehnungssensor nutzbar ist. Der Dehnungssensor kann so beispielsweise in den Flachland-Regionen Deutschlands von Frühjahr bis Herbst im Freien genutzt werden.

Noch vorteilhafter ist bei dem erfindungsgemäßen Dehnungssensor die Martensitstarttemperatur geringer als 0 °C, wodurch der Dehnungssensor in nahezu allen Regionen Deutschland, außer im Hochgebirge, vom Frühjahr bis Herbst im Freien benutzt werden kann. Liegt die Martensitstarttemperatur bei dem erfindungsgemäßen Dehnungssensor unter -10 °C, kann der Dehnungssensor sogar ganzjährig nahezu im gesamten Gebiet Deutschlands genutzt werden.

In der vorliegenden Erfindung wird als elektrischer Leiter vorzugsweise ein Draht aus pseudoelastischer Formgedächtnislegierung verwendet, welcher vorteilhafterweise einen Durchmesser zwischen 5 µm und 1000 µm, bevorzugt zwischen 10 µm und 200 µm aufweist. Die Erfassung von Dehnungen wird aufgrund der elektrischen Widerstandsänderung des Drahtes bei Dehnung desselben realisiert. Aufgrund der Phasenumwandlung im Draht von der austenitischen in die martensitische Phase ist die elektrische Widerstandsänderung sehr hoch. Dadurch resultiert eine sehr hohe Sensitivität des Dehnungssensors.

In einer bevorzugten Ausführungsform des erfindungsgemäßen Dehnungssensors ist das Substrat ein Faser-Kunststoff-Verbundwerkstoff, ein verstärkter Kunststoff oder ein partikelverstärkter Werkstoff. Als Substrat können also beispielsweise glasfaserverstärkte Kunststoffe (GFK), kohlenstofffaserverstärkte Kunststoffe (CFK) oder naturfaserverstärkte Laminate (NFK) dienen. Als Matrixmaterial für den verstärkten Kunststoff kommen beispielsweise Silikon oder Thermoplaste in Betracht, während für partikelverstärkte Werkstoffe Beton, Gips oder Estrich zu nennen sind.

Bei dem erfindungsgemäßen Dehnungssensor ist der Leiter mäanderförmig, spiralförmig und/oder helixförmig in das Substrat eingebracht und/oder auf dem Substrat befestigt. So kann die Verwendung eines oder mehrerer geradliniger Leiter für den Dehnungssensor insbesondere dann vorteilhaft sein, wenn nur in eine Richtung eine Verformung, beispielsweise eine longitudinale Dehnung, zu erwarten ist. Eine mäanderförmige oder spiralförmige, also zweidimensionale, Anordnung des Leiters ermöglicht auch eine Messung durch den Dehnungssensor in zwei Dimensionen. Dadurch können neben longitudinalen Dehnungen also auch Biegungen einer Ebene, in welcher der mäander- oder spiralförmige Leiter angeordnet ist, von dem erfindungsgemäßen Dehnungssensor erfasst werden. Ist der Leiter in Form einer Helix ausgebildet, so kann er beispielsweise ein rohrförmiges Substrat umspannen, und der Dehnungssensor kann dann sowohl Längenänderungen, Biegungen als auch andere mögliche Verformungen des Substrates registrieren. Wenn der Leiter mäanderförmig ausgebildet ist, weist er vorzugsweise lange und kurze Abschnitte auf, wobei die langen Abschnitte vorteilhaft nahezu parallel zueinander ausgerichtet sind. Damit steigt die Sensitivität des Dehnungssensors entlang der Orientierung der langen Abschnitte.

Die Form kann dem Leiter vorzugsweise durch entsprechendes Biegen und anschließendes Formeinprägen gegeben sein. Andererseits ist es auch möglich, dass beispielsweise die Mäander- oder Spiralform durch Stanzen, Schneiden, Erodieren und/oder Elektrodieren eines Blechs einer Formgedächtnislegierung gebildet sind.

Erfindungsgemäß sind Abschnitte des Leiters zur mechanischen Stabilisierung einer Mäander-, Spiral- und/oder Helixform mit einem fadenförmigen, elektrisch isolierenden oder auch elektrisch nicht isolierenden Verstrebungsmaterial miteinander verbunden. Erfindungsgemäß wird der Leiter des Dehnungssensors im Falle einer Verformung des Dehnungssensors durch eine Formänderung des Substrates, neben den pseudoelastischen Eigenschaften der Formgedächtnislegierung, zusätzlich auch durch das fadenförmige Verstrebungsmaterial wieder in seine ursprüngliche Form zurück gebracht, wenn die Verformung des Substrates beendet ist. Das Verstrebungsmaterial ist dabei elektrisch isolierend ausgebildet, um Kurzschlüsse oder andere Beeinflussungen der Formgedächtnislegierung des Dehnungssensors zu vermeiden.

Efindungsgemäß ist das Verstrebungsmaterial in einer Alternative durch textile Bindung mit dem Leiter verbunden. Die textile Bindung ist ein Vernähen, Versticken, Verknoten, Verweben und/oder Verstricken.

In einer weiteren Alternative der vorliegenden Erfindung ist das Verstrebungsmaterial thermoplastisch und mit dem Leiter verschweißt. Das Verschweißen des Verstrebungsmaterials mit dem Leiter ist besonders vorteilhaft, da es schnell und einfach durchzuführen ist sowie eine hohe mechanische Stabilität der Verbindung zwischen dem Verstrebungsmaterial und dem Leiter ermöglicht. Das Verschweißen kann zum Beispiel thermisch, also durch Erhitzen, oder aber auch mittels Ultraschall erfolgen.

Es hat sich außerdem als günstig erwiesen, wenn der Leiter aus einer Nickel-Titan-Legierung besteht. Die Nickel-Titan-Legierung kann beispielsweise Nitinol sein. Nickel-Titan-Legierungen sind in verschiedenen stöchiometrischen Zusammensetzungen kommerziell erhältlich, preisgünstig und korrosionsbeständig.

Der Leiter ist vorzugsweise an wenigstens einem Ende mit einem anderen elektrischen Leiter kontaktiert. Somit kann die Formgedächtnislegierung beispielsweise so verschalten werden, dass sie in einer Wheatstone'schen Brückenschaltung integriert ist, wodurch eine Widerstandsmessung sehr einfach durchgeführt werden kann. Mithilfe des ermittelten elektrischen Widerstandes der Formgedächtnislegierung sind Aussagen über die Dehnung und/oder allgemein über die Verformung des Leiters aus Formgedächtnislegierung und somit auch des Substrates möglich.

Ein derart gestalteter Dehnungssensor kann beispielsweise vorteilhaft bei der Materialcharakterisierung bei mechanischen Prüfungen, bei der Belastungsüberwachung von Bauteilen aus Kunststoff in den Bereichen Medizintechnik, Luftfahrt und/oder Automobil, bei der Erfassung von Dehnungen in biegeschlaffen, elastischen Materialien wie Textilien oder auch bei der Positionserfassung von adaptiven Strukturen mit eingebetteten Aktoren und/oder Sensoren verwendet werden. Außerdem können nach dem dargestellten Prinzip Schaltelemente in Form von mittels Spritzgießen umhüllten Sensorstrukturen als Dehnraten-abhängige Schalter analog dem Prinzip eines Biegebalkens realisiert werden sowie Faser-Kunststoff-Verbundmaterialien mit integrierter Sensorstruktur aus Formgedächtnislegierung als berührungs- bzw. belastungsempfindlicher Schalter.

Die Aufgabe wird außerdem durch ein Verfahren der eingangs genannten Art gelöst, bei dem ein draht- oder bandförmiger elektrischer Leiter aus einer Formgedächtnislegierung auf einem Werkzeug in einer zwei- oder dreidimensionalen Form festgelegt wird, der Leiter mit dem Werkzeug in einer Heizeinrichtung bei einer Temperatur zwischen 400 °C und 900 °C erhitzt wird, der Leiter mit dem Werkzeug nach einer Erhitzungsdauer von 5 bis 15 Minuten aus der Heizeinrichtung entnommen und mit einem Kühlmittel auf Raumtemperatur abgeschreckt wird, der Leiter anschließend von dem Werkzeug getrennt, in ein Substrat eingebracht und/oder auf einem Substrat befestigt und elektrisch kontaktiert wird.

Der draht- oder bandförmige elektrische Leiter wird also zunächst auf einem Werkzeug in einer einzuprägenden Form festgelegt. Dafür kann einerseits ein länglicher Draht in eine gewünschte zwei- oder dreidimensionale Form gebogen werden. Andererseits kann die Form aber beispielsweise aus einem Blech ausgestanzt werden und dann auf dem Werkzeug befestigt werden. Der so in seiner Form festgelegte Leiter wird anschließend zusammen mit dem Werkzeug in einer Heizeinrichtung, wie zum Beispiel einem Ofen, bei einer Temperatur zwischen 400 °C und 900 °C, insbesondere zwischen 450 °C und 800 °C, besonders bevorzugt zwischen 500 °C und 700°C, erhitzt.

Die Zeitdauer des Erhitzens kann dabei je nach Gewicht des Werkzeuges variieren. Durch das Erhitzen wird dem Leiter aus Formgedächtnislegierung die auf dem Werkzeug festgelegte Form eingeprägt. Anschließend wird der Leiter mit einem Kühlmittel, etwa Wasser, kalt abgeschreckt. Sowohl die Zeitdauer, die Temperatur als auch der Vorgang des Abschreckens beeinflussen die Eigenschaften der Formgedächtnislegierung, also beispielsweise die Martensitstarttemperatur und das pseudoelastische Verhalten.

Der Leiter wird vorzugsweise mäanderförmig, spiralförmig und/oder helixförmig auf dem Werkzeug festgelegt. Damit kann dem Leiter aus der Formgedächtnislegierung entsprechend eine Mäander-, Spiral- und/oder Helixform in der Heizeinrichtung eingeprägt werden. Die eingeprägte Form ist dann diejenige Gestalt, in welcher die Formgedächtnislegierung in der austenitischen Phase vorliegt und in welche die Formgedächtnislegierung nach einer Verformung stets zurückkehrt.

Durch das Erhitzen in der Heizeinrichtung können evtl. vorhandene innere Spannungen in dem Leiter abgebaut werden. Dadurch kann die Martensitstarttemperatur verringert werden. Gleichzeitig steigt dadurch die Festigkeit und die Elastizität des Leiters.

Nach dem erfindungsgemäßen Verfahren werden nach dem Abschrecken mit dem Kühlmittel Abschnitte des mäander-, spiral- und/oder helixförmigen Leiters zur mechanischen Stabilisierung mit einem fadenförmigen, elektrisch isolierenden oder auch elektrisch nicht isolierenden Verstrebungsmaterial miteinander verbunden. Dadurch kann die in die Formgedächtnislegierung eingeprägte äußere Gestalt zusätzlich unterstützt werden.

Gemäß einer weiteren Ausführungsform des erfindungsgemäßen Verfahrens wird der in seiner Form nach Erhitzung und Abschreckung festgelegte Leiter mechanisch, chemisch, elektrochemisch und/oder plasmaunterstützt oberflächenbehandelt. Es wird also eine Oberfläche des Leiters modifiziert, wodurch der Leiter beispielsweise besser an dem Substrat anhaften kann. Es kann also vor allem die Kompatibilität des Leiters mit dem Substrat verbessert werden.

Besonders bevorzugt wird auf den Leiter eine mit dem Substrat haftvermittelnd wirkende und/oder elektrisch isolierende oder elektrisch leitende Oberflächenbeschichtung aufgebracht. Nach der Oberflächenbehandlung erfolgt also eine zusätzliche Oberflächenbeschichtung, etwa mit einem haftvermittelnden Primer. Dann dient die Oberflächenbehandlung als vorbereitender Schritt für die Oberflächenbeschichtung. Je nach gewünschtem Einsatzfeld des Dehnungssensors kann die Oberflächenbeschichtung entweder elektrisch leitend oder elektrisch isolierend ausgebildet sein.

In einer weiteren Alternative des erfindungsgemäßen Verfahrens wird der Leiter mechanisch vorgespannt in das Substrat eingebracht und/oder auf dem Substrat befestigt. Dies kann beispielsweise erreicht werden, indem mithilfe des Verstrebungsmaterials eine mechanische Spannung zwischen verschiedenen Mäanderabschnitten erzeugt wird.

Zur Verbesserung der Messwertauflösung kann der Sensor oberhalb und unterhalb der neutralen Faser des zu sensorisierenden Bauteils/Sensor gelegt werden. Die hierdurch entstehende einseitige Stauchung und Streckung des Einzelsensors gleicht in der Wheatstoneschen Brückenschaltung die Temperatur aus und vergrößert zusätzlich die Sensibilität der Sensor-Anordnung.

Der Leiter aus Formgedächtnislegierung wird schließlich mit einem anderen elektrischen Leiter kontaktiert, beispielsweise durch Crimpen, Löten, Schweißen oder durch Kleben mithilfe eines elektrisch leitfähigen Klebstoffes.

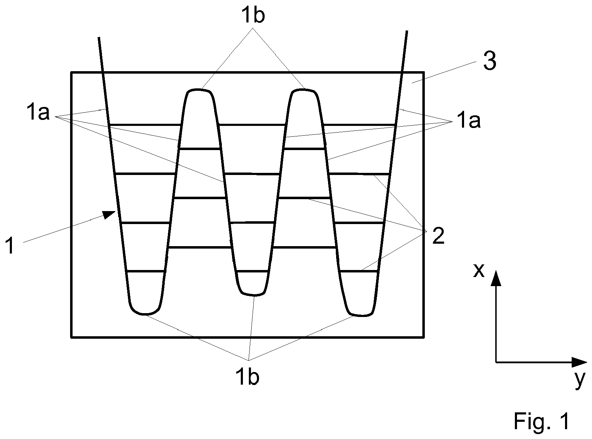

Eine bevorzugte Ausführungsform der vorliegenden Erfindung, deren Aufbau, Funktion und Vorteile ist im Folgenden anhand einer Figur näher erläutert, wobei
- Figur 1: schematisch eine mögliche Grundstruktur eines erfindungsgemäßen Dehnungssensors zeigt.

Die in Figur 1 gezeigte mögliche Grundstruktur eines erfindungsgemäßen Dehnungssensors weist einen in ein Substrat 3 eingebetteten elektrischen Leiter 1 auf. In anderen, nicht gezeigten Ausführungsformen der vorliegenden Erfindung kann der elektrische Leiter 1 auch auf das Substrat 3 aufgebracht sein. Ferner können auch mehrere elektrische Leiter 1 in und/oder auf dem Substrat 3 vorgesehen sein.

Der elektrische Leiter 1 weist in der Ausführungsform von Figur 1 eine Mäanderform mit langen Abschnitten 1a und kurzen Abschnitten 1b auf. Die langen Abschnitte 1a des elektrischen Leiters 1 verlaufen in der gezeigten Ausführungsform etwa parallel nebeneinander, also mit einem Winkel von ca. 70 bis 89° aufeinander zu bzw. einem Winkel von ca. 91 bis 120° voneinander weg laufend, mit wechselnder Verlegerichtung. In anderen, ebenfalls vorteilhaften Varianten der Erfindung können die langen Abschnitte 1a auch genau parallel zueinander verlaufen und sämtlich in der Richtung x angeordnet sein. Die kurzen Abschnitte 1b des elektrischen Leiters 1 sind zu den langen Abschnitten 1a nahezu senkrecht und entlang einer Richtung y mit wechselnder Ausrichtung angeordnet.

Die langen Abschnitte 1a sind außerdem durch Querverstrebungen aus einem fadenförmigen Verstrebungsmaterial 2 verbunden. Das Verstrebungsmaterial 2 ist dabei im Wesentlichen senkrecht zu den langen Abschnitten 1a und parallel zu den kurzen Abschnitten 1b ausgerichtet, also ebenfalls entlang der Richtung y.

Ein Dehnungssensor mit einem mäanderförmigen Leiter gemäß Figur 1 eignet sich insbesondere zur Messung von Dehnungen entlang der in Figur 1 dargestellten Richtung x, also entlang der Richtung, in der die langen Abschnitte 1a orientiert sind. Außerdem sind mit einem solchen Dehnungssensor auch Messungen von Biegedehnungen möglich, welche sich durch eine Biegung des Substrates 3 aus einer durch die in Figur 1 gezeigten Vektoren x und y definierten Ebene heraus ergeben.

## Patentansprüche

1. Dehnungssensor mit wenigstens einem aus einer Formgedächtnislegierung ausgebildeten pseudoelastischen draht- oder bandförmigen elektrischen Leiter (1), welcher in einer zwei- und/oder dreidimensionalen Anordnung in ein Substrat (3) eingebracht oder auf einem Substrat (3) befestigt ist, wobei die Formgedächtnislegierung eine Martensitstarttemperatur (M_{S}) von weniger als 10 °C aufweist,
**dadurch gekennzeichnet,**
**dass** Abschnitte des Leiters (1) zur mechanischen Stabilisierung einer Mäander-, Spiral- und/oder Helixform mit einem fadenförmigen Verstrebungsmaterial (2) durch Querverstrebungen aus dem fadenförmigen Verstrebungsmaterial (2) miteinander verbunden sind, wobei das Verstrebungsmaterial (2) durch Vernähen, Versticken, Verknoten, Verweben und/oder Verstricken mit dem Leiter (1) verbunden ist oder das Verstrebungsmaterial (2) thermoplastisch und mit dem Leiter (1) verschweißt ist.

2. Dehnungssensor nach Anspruch 1, **dadurch gekennzeichnet, dass** das Substrat (3) ein Faser-Kunststoff-Verbundwerkstoff, ein verstärkter Kunststoff oder ein partikelverstärkter Werkstoff ist.

3. Dehnungssensor nach wenigstens einem der vorhergehenden Ansprüche, **dadurch gekennzeichnet, dass** der Leiter (1) aus einer Nickel-Titan-Legierung ausgebildet ist.

4. Dehnungssensor nach wenigstens einem der vorhergehenden Ansprüche, **dadurch gekennzeichnet, dass** der Leiter (1) an wenigstens einem Ende mit einem anderen elektrischen Leiter kontaktiert ist.

5. Verfahren zum Herstellen eines Dehnungssensors nach wenigstens einem der vorhergehenden Ansprüche, wobei ein draht- oder bandförmiger elektrischer Leiter (1) aus einer Formgedächtnislegierung, wobei die Formgedächtnislegierung eine Martensitstarttemperatur (M_{S}) von weniger als 10 °C aufweist, auf einem Werkzeug in einer zwei- oder dreidimensionalen Form festgelegt wird, der Leiter (1) mit dem Werkzeug in einer Heizeinrichtung bei einer Temperatur zwischen 400°C und 900°C erhitzt wird, der Leiter (1) mit dem Werkzeug nach einer Erhitzungsdauer von 5 bis 15 Minuten aus der Heizeinrichtung entnommen und mit einem Kühlmittel auf Raumtemperatur abgeschreckt wird, und der Leiter (1) anschließend von dem Werkzeug getrennt, in ein Substrat (3) eingebracht und/oder auf einem Substrat (3) befestigt und elektrisch kontaktiert wird, und nach dem Abschrecken mit dem Kühlmittel Abschnitte des mäander-, spiral- und/oder helixförmigen Leiters (1) zur mechanischen Stabilisierung mit einem fadenförmigen, elektrisch isolierenden Verstrebungsmaterial (2) durch Querverstrebungen aus dem fadenförmigen Verstrebungsmaterial (2) miteinander verbunden werden, wobei das Verstrebungsmaterial (2) durch Vernähen, Versticken, Verknoten, Verweben und/oder Verstricken mit dem Leiter (1) verbunden wird oder das Verstrebungsmaterial (2) thermoplastisch ist und mit dem Leiter (1) verschweißt wird.

6. Verfahren nach Anspruch 5, **dadurch gekennzeichnet, dass** der Leiter (1) mäanderförmig, spiralförmig und/oder helixförmig auf dem Werkzeug festgelegt wird.

7. Verfahren nach wenigstens einem der Ansprüche 5 bis 6, **dadurch gekennzeichnet, dass** der in seiner Form nach Erhitzung und Abschreckung festgelegte Leiter (1) mechanisch, chemisch, elektrochemisch und/oder plasmaunterstützt oberflächenbehandelt wird.

8. Verfahren nach wenigstens einem der Ansprüche 5 bis 7, **dadurch gekennzeichnet, dass** auf den Leiter (1) eine mit dem Substrat (3) haftvermittelnd wirkende und/oder elektrisch isolierende oder elektrisch leitende Oberflächenbeschichtung aufgebracht wird.

9. Verfahren nach wenigstens einem der Ansprüche 5 bis 8, **dadurch gekennzeichnet, dass** der Leiter (1) mechanisch vorgespannt in das Substrat (3) eingebracht und/oder auf dem Substrat (3) befestigt wird.

## Claims

1. Elongation sensor with at least one pseudo-elastic wire-shaped or band-shaped electrical conductor (1) formed from a shape memory alloy, which is inserted in a substrate (3) in a two and/or three-dimensional arrangement or is fixed on a substrate (3), wherein the shape memory alloy has a martensite starting temperature (M_{S}) of less than 10°C,
**characterized in that**
sections of the conductor (1) for mechanical stabilization of a meander, spiral and/or helix form are connected with each other by means of a thread-shaped strut material (2) by means of transverse struts of the thread-shaped strut material (2), wherein the strut material (2) is connected with the conductor (1) by means of sewing, stitching, knotting, weaving and/or knitting, or the strut material (2) is thermoplastic and welded with the conductor (1).

2. Elongation sensor according to claim 1, **characterized in that** the substrate (3) is a fibre-plastic-composite, a reinforced plastic or a particle reinforced material.

3. Elongation sensor according to at least one of the preceding claims, **characterized in that** the conductor (1) is formed of a nickel-titanium-alloy.

4. Elongation sensor according to at least one of the preceding claims, **characterized in that** the conductor (1) is contacted on at least one end with another electrical conductor.

5. Method for producing an elongation sensor according to at least one of the preceding claims, wherein a wire-shaped or band-shaped electrical conductor (1) of a shape memory alloy, wherein the shape memory alloy has a martensite starting temperature (M_{S}) of less than 10°C, is fixed on a tool in a two or three-dimensional form, the conductor (1) is heated with the tool in a heating device at a temperature between 400°C and 900°C, the conductor (1) is removed from the heating device along with the tool after a heating period of 5 to 15 minutes and is quenched with a cooling agent to room temperature, and the conductor (1) is subsequently separated from the tool, inserted into a substrate (3) and/or fixed on a substrate (3) and electrically contacted, and after the quenching with the cooling agent, sections of the meander, spiral and/or helix shaped conductor (1) are connected with each other by means of a thread-shaped, electrically isolating strut material (2) for mechanical stabilization by means of transverse struts of the thread-shaped strut material (2), wherein the strut material (2) is connected with the conductor (1) by means of sewing, stitching, knotting, weaving and/or knitting, or the strut material (2) is thermoplastic and is welded with the conductor (1).

6. Method according to claim 5, **characterized in that** the conductor (1) is fixed meander, spiral and/or helix-shaped on the tool.

7. Method according to at least one of the claims 5 to 6, **characterized in that** the conductor (1), fixed in its form after heating and quenching, is surface-treated mechanically, chemically, electrochemically and/or plasma supported.

8. Method according to at least one of the claims 5 to 7, **characterized in that** a surface coating promoting adhesion with the substrate (3) and/or being electrically isolating or electrically conductive is applied to the conductor (1).

9. Method according to at least one of the claims 5 to 8, **characterized in that** the conductor (1) is introduced into the substrate (3) and/or is fixed on the substrate (3) mechanically pretensioned.

## Revendications

1. Capteur de contrainte avec au moins un conducteur électrique (1) pseudo-élastique en forme de fil ou de ruban formé d'un alliage à mémoire de forme, qui est introduit dans un agencement bidimensionnel et / ou tridimensionnel dans un substrat (3) ou fixé sur un substrat (3), l'alliage à mémoire de forme présentant une température martensitique de début (M_{S}) inférieure à 10 °C
**caractérisé en ce que,**
des sections du conducteur (1) pour la stabilisation mécanique d'une forme sinueuse, en spirale et / ou hélicoïdale sont reliées les unes aux autres avec un matériau de contreventement filiforme (2) par des contreventements transversaux du matériau de contreventement (2), le matériau de contreventement (2) étant joint au conducteur (1) par coudre, broder, nouer, tisser et / ou tricoter, ou le matériau de contreventement (2) étant thermoplastique et soudé au conducteur (1).

2. Capteur de contrainte selon la revendication 1, **caractérisé en ce que** le substrat (3) est un composite fibre-plastique, un plastique renforcé ou un matériau renforcé de particules.

3. Capteur de contrainte selon au moins l'une des revendications précédentes, **caractérisé en ce que** le conducteur (1) est formé d'un alliage nickel-titane.

4. Capteur de contrainte selon au moins l'une des revendications précédentes, **caractérisé en ce que** le conducteur (1) est mis en contact au moins à une extrémité avec un autre conducteur électrique.

5. Procédé de fabrication d'un capteur de contrainte selon au moins l'une des revendications précédentes, un conducteur électrique (1) en forme de fil ou de ruban (1) étant fixé sur un outil sous une forme bidimensionnelle ou tridimensionnelle depuis un alliage à mémoire de forme, ledit alliage à mémoire de forme présentant une température martensitique de début (M_{S}) inférieure à 10 °C, le conducteur (1) avec l'outil étant chauffé dans un dispositif de chauffage à une température entre 400 °C et 900 °C, le conducteur (1) avec l'outil étant retiré du dispositif de chauffage après une période de chauffage de 5 à 15 minutes et trempé à température ambiante avec un liquide de refroidissement, et le conducteur (1) étant ensuite séparé de l'outil, introduit dans un substrat (3) et / ou fixé sur un substrat (3) et mis en contact électriquement, et après tremper avec le liquide de refroidissement des sections du conducteur (1) en forme sinueuse, en spirale et / ou hélicoïdale sont reliées les unes aux autres avec un matériau de contreventement filiforme et électriquement isolant (2) pour la stabilisation mécanique par des contreventements transversaux du matériau de contreventements (2), le matériau de contreventement (2) étant joint au conducteur (1) par coudre, broder, nouer, tisser et / ou tricoter, ou le matériau de contreventement (2) étant thermoplastique et soudé au conducteur (1).

6. Procédé selon la revendication 5, **caractérisé en ce que** le conducteur (1) est fixé sur l'outil en forme sinueuse, en spirale et / ou hélicoïdale.

7. Procédé selon au moins l'une des revendications 5 à 6, **caractérisé en ce que** le conducteur (1), qui est fixé dans sa forme après chauffage et trempe, est traité en surface mécaniquement, chimiquement, électrochimiquement et / ou assisté par plasma.

8. Procédé selon au moins l'une des revendications 5 à 7, **caractérisé en ce qu'**un revêtement de surface qui agit comme promoteur d'adhésion avec le substrat (3) et / ou qui est électriquement isolant ou électriquement conducteur est appliqué sur le conducteur (1).

9. Procédé selon au moins l'une des revendications 5 à 8, **caractérisé en ce que** le conducteur (1) est introduit dans le substrat (3) et / ou est fixé sur le substrat (3) en état mécaniquement précontrainte.
